# EUROPEAN PATENT APPLICATION

(11) **EP 4 564 748 A1**
(43) Date of publication of application: **04.06.2025**
(21) Application number: 24213942.6
(22) Date of filing: 19.11.2024
(51) Int. Cl.: H04L 12/18

(54) **MULTICAST HANDLING BASED ON MEDIA ACCESS CONTROL ADDRESS**

(30) Priority: 30.11.2023 US 202318524744
(71) Applicant: Juniper Networks, Inc., Sunnyvale, CA 94089-1206 (US)
(72) Inventor: NAGARAJ, Vinod Kumar, Sunnyvale, 94089 (US); ZHANG, Zhaohui, Sunnyvale, 94089 (US)
(74) Representative: D Young & Co LLP

(57) **Abstract**

In some implementations, a network device of a network may discover a media access control (MAC) address of a host device, associated with an attachment circuit, that has moved to the network device from another network device of the network. The network device may transmit, based on discovering the MAC address of the host device that has moved to the network device from the other network device, over the attachment circuit, a general membership query. In some implementations, another network device may receive a media access control (MAC) advertisement route message indicating that the network device has discovered the MAC address of the host device. The other network device may delete one or more multicast group memberships associated with the host device.

## Description

### BACKGROUND

"Multicasting" generally refers to the delivery of data to a group of destinations. Multicast data may be transmitted once over each link of the network, which may conserve bandwidth. Data may be replicated when the path to the destinations splits between multiple links. Networks may use routers, switches, and other network devices for receiving and forwarding multicast data. Such network devices may receive and/or forward multicast packets through interfaces (e.g., ports).

### SUMMARY

Particular aspects are set out in the appended independent claims. Various optional embodiments are set out in the dependent claims. Some implementations described herein relate to a method. The method may include receiving, by a first network device, a media access control (MAC) advertisement route message indicating that a second network device has discovered a MAC address of a host device. The method may include deleting, by the first network device, one or more multicast group memberships associated with the host device.

Some implementations described herein relate to a method. The method may include discovering, by a network device of a network, a MAC address of a host device, associated with an attachment circuit, that has moved to the network device from another network device of the network. The method may include transmitting, by the network device, based on discovering the MAC address of the host device that has moved to the network device from the other network device, over the attachment circuit, a general membership query.

Some implementations described herein relate to a first network device. The first network device may include one or more memories and one or more processors. The one or more processors may be to receive a MAC advertisement route message indicating that a second network device has discovered a MAC address of a host device. The one or more processors may be to delete one or more multicast group memberships associated with the host device.

### BRIEF DESCRIPTION OF THE DRAWINGS

Fig. 1 is a diagram of an example implementation associated with MAC-address-based multicast handling.
Fig. 2 is a diagram of an example environment in which systems and/or methods described herein may be implemented.
Fig. 3 is a diagram of example components of a device associated with handling multicast traffic based on a MAC address of a host device.
Fig. 4 is a diagram of example components of a device associated with handling multicast traffic based on a MAC address of a host device.
Fig. 5 is a flowchart of an example process associated with handling of multicast traffic based on a MAC address of a host device.

### DETAILED DESCRIPTION

The following detailed description of example implementations refers to the accompanying drawings. The same reference numbers in different drawings may identify the same or similar elements.

A multicast source may transmit multicast data in the form of a multicast stream. The multicast stream may include multicast packets, each containing a multicast data payload and a header. The multicast data payload may be a piece of data from the multicast stream requested by a host device. The header may provide information including network addresses of a multicast source and a multicast group address subscribed to by the host device. The multicast stream may be defined as a group of multicast packets that make up the data being multicast for a particular multicast source and/or multicast group.

A multicast source may transmit a multicast stream to a first provider edge device of a network fabric. The network fabric (e.g., one or more network devices in the network fabric) may replicate and/or forward the multicast stream to one or more provider edge devices, each of which may in turn forward the multicast stream to one or more host devices (e.g., multicast listeners). For example, a second provider edge device may receive the multicast stream and forward the multicast stream to a host device (e.g., an internet group management protocol (IGMP) host device). In some cases, the network fabric may be an Ethernet virtual private network (EVPN) fabric, and the provider edge devices may include respective EVPN databases that store EVPN routes for the EVPN fabric.

Each provider edge device may maintain multicast forwarding states for respective multicast streams. The multicast forwarding state in a routing device may be notated as (S,G) or (*,G). In (S,G), the S may refer to a unicast internet protocol (IP) address of the multicast source for the multicast stream, and the G may refer to the multicast group IP address for which S is the multicast source. The asterisk (*) in the (*,G) notation may be a wildcard indicating that the multicast forwarding state applies to any multicast source for the multicast group IP address.

The provider edge devices may use IGMP snooping techniques to forward the multicast stream. IGMP snooping techniques may enable a provider edge device to monitor IGMP traffic from one or more host devices and determine which (if any) of the one or more host devices are to receive the multicast stream as determined using the IGMP traffic. For example, the provider edge device may snoop an IGMP membership report indicating that the host device is to join the multicast group for the multicast stream. In some cases, the provider edge devices may include respective IGMP snooping databases that store multicast information (e.g., the (S,G) for the multicast stream, the interface on which the IGMP traffic was received, or the like).

Additionally, or alternatively, the provider edge devices may use selective multicast Ethernet tag (SMET) forwarding techniques to forward the multicast stream. SMET forwarding techniques may enable a provider edge device to selectively forward multicast traffic based on the presence or absence of one or more host devices that are to receive the multicast stream. For example, the second provider edge device may perform IGMP snooping on IGMP traffic from the host device and advertise an EVPN type 6 SMET route to the first provide edge, enabling the first provider edge device to forward multicast traffic to the second provider edge device (e.g., to only the second provider edge device) based on the EVPN type 6 SMET route. Deploying IGMP snooping techniques and SMET forwarding techniques in the EVPN fabric may provide the optimized forwarding path(s) for the multicast stream.

After the host device connects to the second provider edge device, the second provider edge device may advertise, to the remaining provider edge devices, that the host device is connected to the second provider edge device. For example, the second provider edge device may transmit a MAC advertisement route message identifying the host device by the MAC address of the host device. For example, the second provider edge device may advertise an EVPN type 2 route, which may indicate the location of the host device (as identified by the MAC address of the host device). The EVPN type 2 route may be assigned a sequence number (SN), such as SN1.

In some cases, the provider edge devices may include respective MAC forwarding tables that associate MAC addresses with corresponding provider edge devices. For example, in response to receiving the MAC advertisement route message from the second provider edge device, the remaining provider edge devices may update the MAC forwarding tables to associate the MAC address of the host device with the second provider edge device.

The host device may be mobile (e.g., the host device may move (e.g., migrate) from behind one provider edge device to behind another provider edge device). In some cases, the host device may move to a third provider edge device. The third provider edge device may detect the host device and advertise, to the remaining provider edge devices, that the host device is connected to the third provider edge device. For example, the third provider edge device may advertise an EVPN type 2 route with a higher SN than SN1, such as SN2. Based on SN2 being higher than SN1, the remaining provider edge devices may update the MAC forwarding tables to associate the MAC address of the host device with third provider edge device (rather than the second provider edge device).

In addition, the third provider edge device may snoop an IGMP membership report transmitted from the host device. Based on the IGMP membership report, the third provider edge device may create a multicast forwarding state for the multicast flow and advertise an EVPN type 6 SMET route to the first provider edge device. The EVPN type 6 SMET route may cause the multicast stream to be transmitted to the third provider edge device. As a result, the third provider edge device may receive the multicast stream and forward the multicast stream to the host device.

After the host device has moved to the third provider edge device, the second provider edge device may continue to receive the multicast stream and forward the multicast stream to an access interface (e.g., an access local area network (LAN)), even if no other host devices that are to receive the multicast stream are connected to the second provider edge device. For example, the EVPN type 6 SMET route for the second provider edge device, which causes the second provider edge device to receive and forward the multicast stream, may remain active.

For example, the host device may not transmit an IGMP group leave message to the second provider edge device because the host device is not aware that the host device has moved from the second provider edge device to the third provider edge device. An IGMP group leave message, if received by the second provider edge device, may prompt the second provider edge device to transmit a group-specific membership query downstream, determine whether any host devices that are to receive the multicast stream are still connected to the second provider edge device, and, if not, delete the EVPN type 6 SMET route.

The host device may not be aware that the host device has moved from the second provider edge device to the third provider edge device because the host device may communicate with the provider edge devices over the same access LAN (e.g., as emulated by the EVPN fabric). After moving from the second provider edge device to the access LAN of the third provider edge device, the host device can no longer transmit an IGMP group leave message to the second provider edge device. As a result, the host device may move seamlessly across provider edge devices, continually refreshing IGMP reports because the host device is to receive the multicast stream.

Updating the MAC forwarding tables to reflect the movement of the host device to the third provider edge device does not prevent the second provider edge device from receiving and forwarding the multicast stream because MAC forwarding tables may be consulted for unicast transmissions, not for multicast transmissions.

After the host device moves to the third provider edge device, the second provider edge device may continue to receive and forward the multicast stream for an extended period of time. For example, the second provider edge device may not clean the multicast forwarding state of the multicast stream until a join timeout timer expires (e.g., 210 seconds). For example, if the join timeout timer is 210 seconds, then the second provider edge device may continue to receive and forward the multicast stream for up to 210 seconds after the host device moves from the second provider edge device.

Thus, after the host device moves, the first provider edge device may forward multicast traffic to the second provider edge device, and the second provider edge device may forward the multicast traffic toward an access LAN of the second provider edge device. For example, the first and second provider edge devices may forward the multicast traffic even if the second provider edge device no longer has any host device that is to receive the multicast stream. IGMP snooping techniques and SMET forwarding techniques are ineffective to prevent such forwarding.

The multicast traffic forwarded by the first and second provider edge devices may consume packet processing resources. For example, packet processing resources on one or more provider edge devices, the EVPN fabric, and/or access interface may generate the multicast traffic by replicating multicast packets. Additionally, or alternatively, the multicast traffic forwarded by the first and second provider edge devices may consume bandwidth. For example, the multicast traffic may consume bandwidth on the EVPN fabric and the access interface. For example, the bandwidth (e.g., quantity of channels) of the access interface can be limited. As a result, the multicast traffic may impact overall user experience by consuming bandwidth that could otherwise be occupied by other multicast traffic that is being forwarded to a host device. In scenarios where multiple host devices regularly move across provider edge devices (e.g., resulting in unnecessary forwarding of large flows of multicast traffic), consumption of packet processing resources and bandwidth further increases.

Furthermore, because the host device is not aware that the host device has moved from the second provider edge device to the third provider edge device, the host device may not transmit an IGMP membership report (e.g., an IGMP join request) to the third provider edge device (e.g., via an attachment circuit (AC)) in a timely manner. For example, the third provider edge device creates a multicast forwarding state and advertises EVPN type 6 SMET route to attract the multicast stream after snooping an IGMP membership report transmitting by the host device. The host device may transmit the IGMP membership report infrequently (e.g., approximately once every sixty seconds). As a result, the host device may experience a delay (e.g., up to approximately sixty seconds) after moving to the provider edge device before receiving the multicast stream.

Although IGMP is specifically mentioned above, the issues described herein may be present in other contexts, such as multicast listener discovery (MLD). For example, after a host device moves between provider edge devices, MLD-based multicast traffic may unnecessarily consume packet processing resources and bandwidth, and/or the host device may experience a delay in receiving the multicast traffic, as described above.

Some implementations described herein enable handling of multicast traffic using a MAC address of the host device. In some aspects, provider edge devices may track host device mobility using a MAC address of the host device. For example, a provider edge device from which the host device moved may delete one or more multicast group memberships and/or transmit a SMET route withdraw message in response to receiving a MAC advertisement route message. In some aspects, a provider edge device to which the host device moved may transmit a general membership query in response to determining that the host device moved to the provider edge device. For example, the provider edge device may determine that the host device moved to the provider edge device by discovering the MAC address of the host device.

As a result, by deleting the one or more multicast group memberships, the provider edge device from which the host device moved may quickly stop forwarding the multicast traffic, which may reduce packet processing resources and bandwidth consumption. By transmitting a SMET route withdraw message, the provider edge device from which the host device moved may quickly stop receiving the multicast traffic, which may further reduce packet processing resources and bandwidth consumption. By transmitting the general membership query, the provider edge device to which the host device moved may reduce the delay before the provider edge device can begin receiving the multicast traffic and forwarding the multicast traffic to the host device.

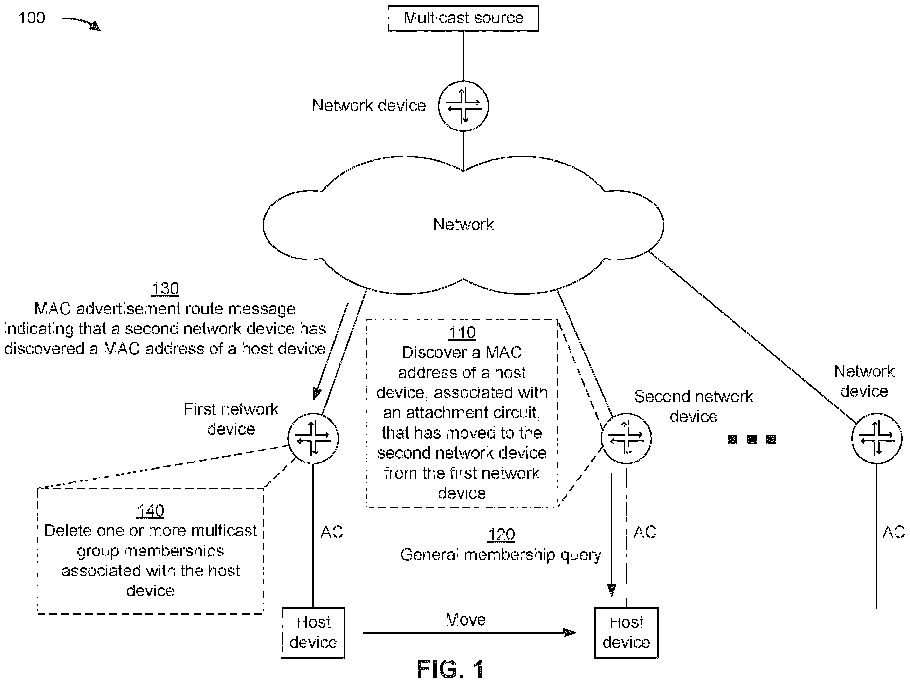

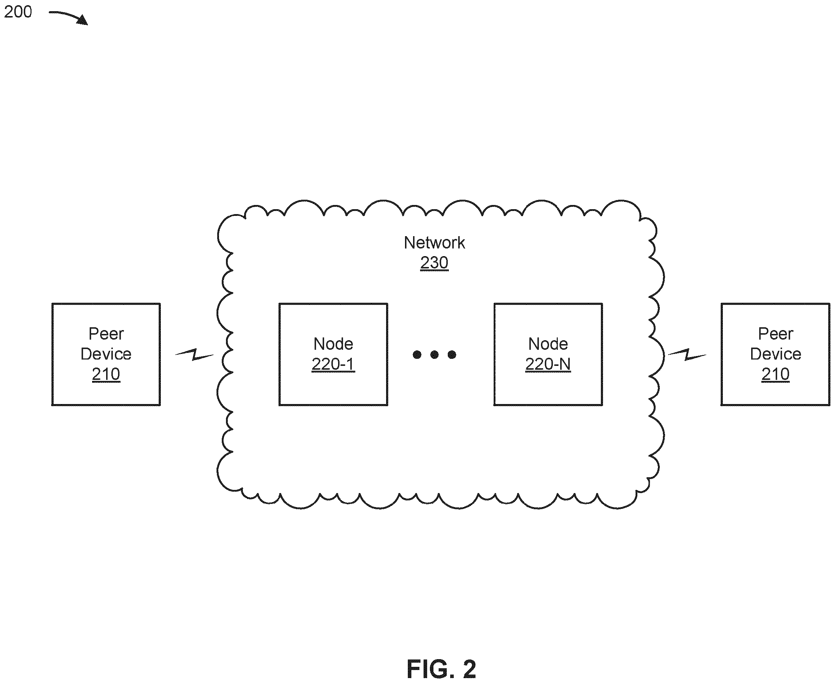

Fig. 1 is a diagram of an example implementation 100 associated with MAC-address-based multicast handling. As shown in Fig. 1, example implementation 100 includes a multicast source device, a plurality of network devices (including a first network device and a second network device) of a network, and a host device. The multicast source may be any suitable source of a multicast stream. The network devices may be provider edge devices associated with the network, and the network may be an EVPN that includes an EVPN fabric. For example, the provider edge devices may be associated with the EVPN in that the provider edge devices are located at the edge of the EVPN. The network devices may be configured for IGMP snooping techniques and/or SMET forwarding techniques. The host device may be any suitable mobile host device, such as a virtual machine (VM), a handheld host device, an IP television (IPTV) host device, an IP version 6 (IPv6) host device, and/or the like. These devices are described in more detail below in connection with Figs. 2-4.

In some examples, the host device may connect to the first network device. The first network device may identify a MAC address of the host device and create a multicast forwarding state associated with the host device (e.g., if such a multicast forwarding state has not yet been created). The multicast forwarding state may be associated with the host device in that the multicast forwarding state represents a multicast stream that the host device is to receive.

The first network device may use IGMP snooping techniques and/or SMET forwarding techniques. For example, the first network device may use IGMP snooping techniques to snoop an IGMP report and identify the MAC address of the host device from the IGMP report. For example, the first network device may identify a source MAC address of the IGMP report as the MAC address of the host device. The first network devices may also use IGMP snooping techniques may also be used to create the multicast forwarding state associated with the host device. In some examples, the first network device may use SMET forwarding techniques to begin receiving a multicast stream corresponding to the multicast forwarding state. For example, the first network device may advertise an EVPN type 6 SMET route that causes the multicast stream to be forwarded to the first network device.

The first network may receive the multicast stream from the multicast source. The multicast source may transmit the multicast stream to one of the network devices, which in turn forwards the multicast stream to the network, and the network may forward the multicast stream to one or more other network devices including the first network device. For example, the first network device may receive the multicast stream from the network and forward the multicast stream to the host device via an AC over an access network between the first network device and the host device.

Explicit tracking (e.g., IGMP explicit tracking) may or may not be enabled on the first network device. If explicit tracking is enabled, then the first network device may explicitly track multicast parameters in a database associated with IGMP snooping with explicit tracking. The database associated with IGMP snooping with explicit tracking may be local to the first network device. The database associated with IGMP snooping with explicit tracking may also be referred to as an "IGMP snooping database."

In some aspects, the first network device may store, in an entry of the database associated with IGMP (or MLD) snooping with explicit tracking, the MAC address of the host device, one or more multicast group memberships associated with the host device, and an AC of the first network device (e.g., an interface from which the multicast stream is transmitted to the host device). Thus, the database associated with IGMP snooping with explicit tracking may store (e.g., add, append, or the like) the MAC address of the host device. In some examples, each entry in the database associated with IGMP snooping with explicit tracking may include a MAC address of a host device. The first network device may store the MAC address, the one or more multicast group memberships, and the AC based on identifying an association of the one or more multicast group memberships with the host device. For example, the first network device may store the MAC address, the one or more multicast group memberships, and the AC in response to determining that the one or more multicast group memberships are associated with the host device. The one or more multicast group memberships may be associated with the host device in that the host device may have joined the one or more multicast group memberships. Thus, in some examples, when using IGMP (or MLD) explicit tracking, upon detecting a MAC move, the first network device may remove the explicit tracking entry for the host device (e.g., the explicit tracking may be based on the MAC address of the host device).

As shown in Fig. 1, the host device may move from the first network device to the second network device. For example, the host device may move from the AC of the first network device to the AC of the second network device. For example, the host device may disassociate with the AC of the first network device and associate with the AC of the second network device.

As shown by reference number 110, the second network device may discover the MAC address of the host device. The host device may be associated with an AC (e.g., the AC of the second network device). In some examples, the second network device may discover the MAC address of the host device using IGMP snooping techniques. For example, the second network device use IGMP snooping techniques to snoop an IGMP report transmitted from the host device and identify the MAC address of the host device from the IGMP report. For example, the second network device may identify a source MAC address of the IGMP report as the MAC address of the host device.

As shown by reference number 120, the second network device may transmit, based on discovering the MAC address of the host device, over the AC (e.g., the AC of the second network device), a general membership query. For example, discovering the MAC address may trigger an IGMP snooping module on the second network device to issue an IGMP general query on the AC.

In some aspects, the second network device may receive a membership report associated with the host device. For example, the membership report may be an IGMP membership report solicited on the AC by the membership report. For example, the second network device may receive the membership report based on (e.g., in response to) the general membership query. The membership report may be associated with the host device in that the membership report may indicate that the host device is to receive the multicast stream. In some aspects, the second network device may update a group membership database based on the membership report (e.g., the second network device may update the group membership database accordingly).

In some aspects, the second network device may update a membership associated with the host device. For example, the membership may be an IGMP membership. The membership may be associated with the host device in that the host device is to receive the multicast stream by virtue of the membership.

In some aspects, the second network device may transmit, based on the membership report, a SMET route advertise message. For example, the second network device may advertise an EVPN type 6 SMET route that causes the multicast stream to be forwarded to the second network device. Thus, the SMET route advertise message may enable the second network device to attract multicast traffic for the host device (e.g., the multicast stream).

As shown by reference number 130, the first network device may receive a MAC advertisement route message. For example, the first network device may receive the MAC advertisement route message, via the network, from the second network device. The MAC advertisement route message may indicate that the second network device has discovered the MAC address of the host device. For example, the MAC advertisement route message may be part of a MAC (and/or VM) mobility mechanism used to indicate MAC mobility of the host device. The MAC advertisement route message may include the MAC address of the host device.

As shown by reference number 140, the first network device may delete the one or more multicast group memberships associated with the host device. For example, the MAC advertisement route message may trigger an IGMP snooping module on the first network device to delete (e.g., clean up, flush, or the like) the corresponding one or more multicast group memberships.

In some aspects (e.g., where explicit tracking is enabled), the first network may delete the one or more multicast group memberships by deleting the entry from the database associated with IGMP snooping with explicit tracking. For example, the IGMP snooping module may clean up the one or more multicast group memberships in the database in response to the MAC advertisement route message. In some examples, the first network device may identify the MAC address of the host device from the MAC advertisement route message and delete any entries in the database that contain the MAC address of the host device. Thus, the first network device may stop forwarding the multicast stream over the AC.

In some aspects, based on (e.g., in response to) receiving the MAC advertisement route message, the first network device may transmit a group-specific membership query for a multicast group membership of the one or more multicast group memberships associated with the host device. Such aspects may be employed in scenarios where explicit tracking is not enabled, or where explicit tracking is enabled but the database does not include an entry that contains the MAC address of the host device. In some examples, the MAC advertisement route message may trigger the IGMP snooping module to issue an IGMP group-specific query for all memberships on the AC where the host device was previously connected.

In some aspects, the first network device may determine that a response to the group-specific membership query has not been received. For example, the first network device may not receive any IGMP membership report in response to the group-specific membership query. No response being received may indicate that there are no host devices on the AC of the first network device that are to receive the multicast stream. Accordingly, based on determining that the response to the group-specific membership query has not been received, the first network device may delete the multicast group membership. Thus, the first network device may clean up stale memberships on the AC, and the first network device may stop forwarding the multicast stream over the AC.

In some aspects, based on deleting the one or more multicast group memberships, the first network device may transmit a SMET route withdraw message. The SMET route withdraw message may withdraw the EVPN type 6 SMET route that caused the multicast stream to be forwarded to the first network device. For example, the first network device may transmit the SMET route withdraw message to the network, and the network may forward the SMET route withdraw message to the network device connected to the multicast source. Thus, the first network device may withdraw the EVPN type 6 SMET route, and the network device connected to the multicast source may stop forwarding the multicast stream to the first network device.

In some aspects, the first network device may delete the one or more multicast group memberships associated with the host device using an IP address of the host device. For example, in an explicit tracking scenario, the first network device may, in response to detecting a MAC move, use the IP address of the host device to remove the entry. For example, when using IGMP (or MLD) explicit tracking, upon detecting a MAC move, the first network device may remove the explicit tracking entry for the host device (e.g., the explicit tracking may be based on the IP address of the host device).

Although IGMP is specifically mentioned in connection with Fig. 1, the techniques described herein may apply in other contexts, such as MLD. For example, the general query transmitted by the second network device based on discovering the MAC address of the host device (reference number 130) may be an MLD-based general membership query (e.g., an MLD general query). Additionally, or alternatively, the one or more multicast group memberships deleted by the first network device based on the MAC advertisement route message (reference number 140) may be one or more MLD-based multicast group memberships. Furthermore, operations 110-140 may be performed in any suitable order.

Deleting the one or more multicast group memberships based on the MAC advertisement route message may enable the first network device to quickly cease forwarding the multicast traffic, which may reduce packet processing resources and/or bandwidth consumption. For example, deleting the one or more multicast group memberships based on the MAC advertisement route message increase bandwidth for other multicast streams for other host devices. Deleting the one or more multicast group memberships based on the MAC advertisement route message may enable the first network device to cease forwarding the multicast traffic in a lightweight manner (e.g., in a manner that involves little memory and/or processing resources). As a result, for example, techniques described herein may be implemented on network devices with low memory and/or processing capacity, such as network devices in spine-leaf architectures.

Storing the MAC address in the entry of the database associated with IGMP or MLD snooping with explicit tracking may enable the first network device to exploit explicit tracking to minimize signaling overhead and reduce the wait time for cleaning up the multicast forwarding state. Transmitting the group-specific membership query based on receiving the MAC advertisement route message may enable the first network device to quickly cease forwarding the multicast stream in scenarios where explicit tracking is not enabled (or where explicit tracking is enabled and there is no entry with the MAC address in the database).

Transmitting the SMET route withdraw message based on deleting the one or more multicast group memberships may enable the first network device to quickly cease receiving the multicast stream, which may further reduce packet processing resources and bandwidth consumption. For example, packet processing resources and bandwidth consumption may be reduced on network devices in the network.

Transmitting the general membership query based on discovering the MAC address of the host device may enable the second network device to reduce the delay before the second network device can begin receiving the multicast stream and forwarding the multicast stream to the host device. For example, transmitting the general membership query may enable the second network device to quickly create a multicast forwarding state for the host device and advertise a SMET route advertise message to receive the multicast stream on behalf of the host device.

As indicated above, Fig. 1 is provided as an example. Other examples may differ from what is described with regard to Fig. 1. The number and arrangement of devices shown in Fig. 1 are provided as an example. In practice, there may be additional devices, fewer devices, different devices, or differently arranged devices than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) shown in Fig. 1 may perform one or more functions described as being performed by another set of devices shown in Fig. 1.

Fig. 2 is a diagram of an example environment 200 in which systems and/or methods described herein may be implemented. As shown in Fig. 2, environment 200 may include one or more peer devices 210, a group of nodes 220 (shown as node 220-1 through node 220-N), and a network 230. Devices of environment 200 may interconnect via wired connections, wireless connections, or a combination of wired and wireless connections.

Peer device 210 includes one or more devices capable of receiving and/or providing network traffic. For example, peer device 210 may include a traffic transfer device, such as a router, a gateway, a switch, a firewall, a hub, a bridge, a reverse proxy, a server (e.g., a proxy server, a server executing a virtual machine, etc.), a security device, an intrusion detection device, a load balancer, or a similar type of device. In some implementations, peer device 210 may include an endpoint device that is a source or a destination for network traffic. For example, peer device 210 may include a computer or a similar type of device. Peer device 210 may receive network traffic from and/or may provide network traffic (e.g., payload packets) to other peer devices 210 via network 230 (e.g., by routing payload packets using node(s) 220 as an intermediary). In some implementations, peer device 210 may include an edge device that is located at an edge of one or more networks. For example, peer device 210 receive network traffic from and/or may provide network traffic (e.g., payload packets) to devices external to network 230.

Node 220 includes one or more devices capable of receiving, processing, storing, routing, and/or providing traffic (e.g., a payload packet, a file, etc.) in a manner described herein. For example, node 220 may include a router, such as a label switching router (LSR), a label edge router (LER), an ingress router, an egress router, a provider router (e.g., a provider edge router, a provider core router, etc.), a virtual router, or another type of router. Additionally, or alternatively, node 220 may include a gateway, a switch, a firewall, a hub, a bridge, a reverse proxy, a server (e.g., a proxy server, a cloud server, a data center server, etc.), a load balancer, and/or a similar device.

In some implementations, node 220 may be a physical device implemented within a housing, such as a chassis. In some implementations, node 220 may be a virtual device implemented by one or more computer devices of a cloud computing environment or a data center.

In some implementations, node 220 may be configured with one or more segment translation tables. In some implementations, node 220 may receive a payload packet from peer device 210. In some implementations, node 220 may encapsulate the payload packet using a compressed routing header (CRH) and may route the IP payload packet to another node 220, using one or more techniques described elsewhere herein. In some implementations, node 220 may be an edge node in network 230. In some implementations, node 220 may be an intermediary node in network 230 (i.e., a node between two or more edge nodes).

Network 230 includes one or more wired and/or wireless networks. For example, network 230 may include a cellular network (e.g., a fifth generation (5G) network, a fourth generation (4G) network, such as a long-term evolution (LTE) network, a third generation (3G) network, a code division multiple access (CDMA) network, a public land mobile network (PLMN), a LAN, a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as one or more examples. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

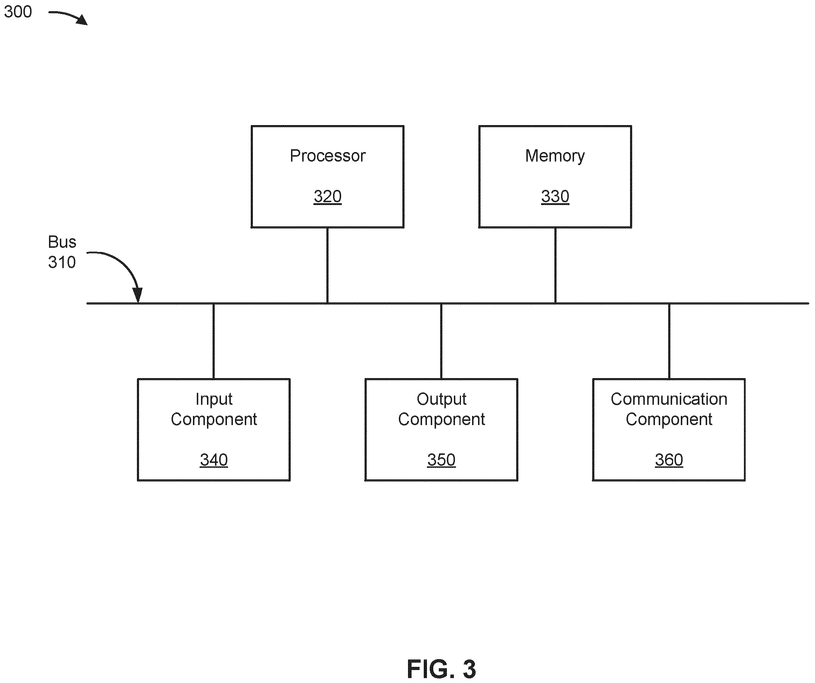

Fig. 3 is a diagram of example components of a device 300 associated with handling multicast traffic based on a MAC address of a host device. The device 300 may correspond to the peer device 210 and/or the node 220. In some implementations, the peer device 210 and/or the node 220 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

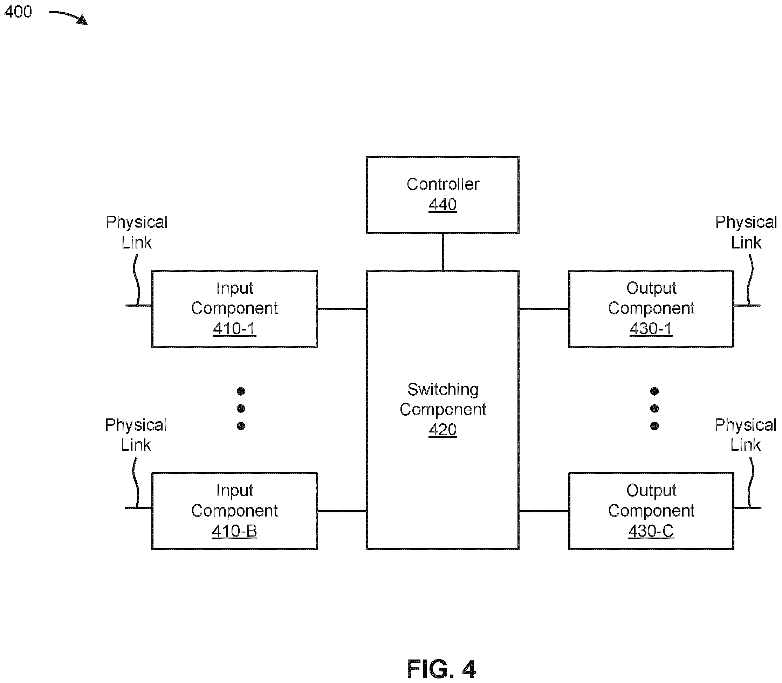

Fig. 4 is a diagram of example components of a device 400 associated with handling multicast traffic based on a MAC address of a host device. Device 400 may correspond to the peer device 210 and/or the node 220. In some implementations, the peer device 210 and/or the node 220 may include one or more devices 400 and/or one or more components of device 400. As shown in Fig. 4, device 400 may include one or more input components 410-1 through 410-B (B > 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processor. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions stored by a non-transitory computer-readable medium. A computer-readable medium may be a non-transitory memory device. A memory device includes memory space within a single physical storage device or memory space spread across multiple physical storage devices. Additionally, or alternatively, a computer-readable medium can include transient media such as carrier waves and transmission media.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

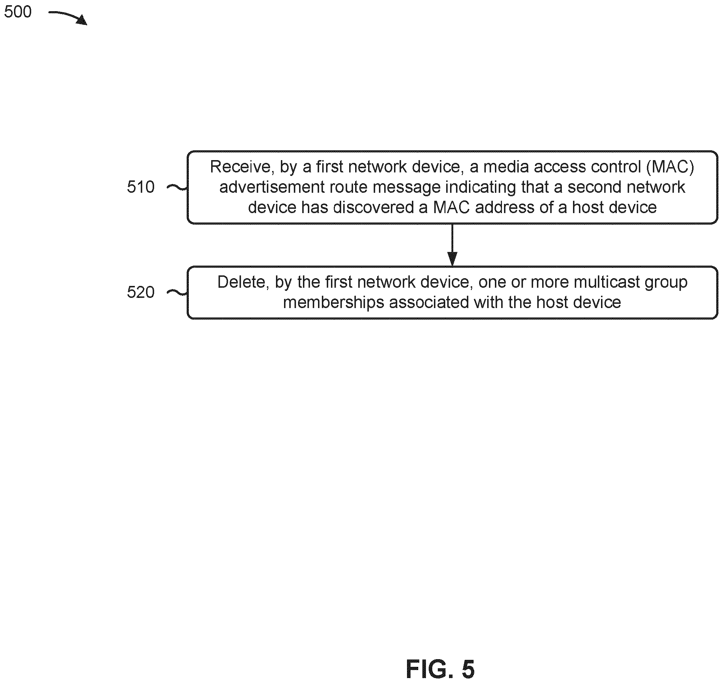

Fig. 5 is a flowchart of an example process 500 associated with handling of multicast traffic based on a MAC address of a host device. In some implementations, one or more process blocks of Fig. 5 are performed by a first network device (e.g., the first network device of Fig. 1). In some implementations, one or more process blocks of Fig. 5 are performed by another device or a group of devices separate from or including the first network device, such as a peer device (e.g., peer device 210 and/or a node (e.g., node 220). Additionally, or alternatively, one or more process blocks of Fig. 5 may be performed by one or more components of device 300, such as processor 320, memory 330, input component 340, output component 350, and/or communication component 360, and/or one or more components of device 400, such as input component 410, switching component 420, output component 430, and/or controller 440.

As shown in Fig. 5, process 500 may include receiving a MAC advertisement route message indicating that a second network device has discovered a MAC address of a host device (block 510). For example, the first network device may receive a MAC advertisement route message indicating that a second network device has discovered a MAC address of a host device, as described above.

As further shown in Fig. 5, process 500 may include deleting one or more multicast group memberships associated with the host device (block 520). For example, the first network device may delete one or more multicast group memberships associated with the host device, as described above.

Process 500 may include additional implementations, such as any single implementation or any combination of implementations described below and/or in connection with one or more other processes described elsewhere herein.

In a first implementation, process 500 includes storing, by the first network device, based on identifying an association of the one or more multicast group memberships with the host device, the MAC address, the one or more multicast group memberships associated with the host device, and an AC of the first network device in an entry of a database associated with IGMP or MLD snooping with explicit tracking.

In a second implementation, alone or in combination with the first implementation, deleting the one or more multicast group memberships associated with the host device includes deleting the entry from the database.

In a third implementation, alone or in combination with one or more of the first and second implementations, process 500 includes transmitting, by the first network device, based on receiving the MAC advertisement route message, a group-specific membership query for a multicast group membership of the one or more multicast group memberships associated with the host device.

In a fourth implementation, alone or in combination with one or more of the first through third implementations, process 500 includes determining that a response to the group-specific membership query has not been received, and deleting the one or more multicast group memberships associated with the host device includes deleting the one or more multicast group memberships associated with the host device based on determining that the response to the group-specific membership query has not been received.

In a fifth implementation, alone or in combination with one or more of the first through fourth implementations, deleting the one or more multicast group memberships associated with the host device includes deleting the one or more multicast group memberships associated with the host device using an IP address of the host device.

In a sixth implementation, alone or in combination with one or more of the first through fifth implementations, the first network device is a first provider edge device associated with an EVPN, and the second network device is a second provider edge device associated with the EVPN.

In a seventh implementation, alone or in combination with one or more of the first through sixth implementations, the host device is a virtual machine.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

Thus, from one perspective, there has now been described a network device of a network which may discover a media access control (MAC) address of a host device, associated with an attachment circuit, that has moved to the network device from another network device of the network. The network device may transmit, based on discovering the MAC address of the host device that has moved to the network device from the other network device, over the attachment circuit, a general membership query. In some implementations, another network device may receive a media access control (MAC) advertisement route message indicating that the network device has discovered the MAC address of the host device. The other network device may delete one or more multicast group memberships associated with the host device.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

Further examples of feature combinations taught by the present disclosure are set out in the following numbered clauses:
1. A method, comprising:
   receiving, by a first network device, a media access control (MAC) advertisement route message indicating that a second network device has discovered a MAC address of a host device; and
   deleting, by the first network device, one or more multicast group memberships associated with the host device.
2. The method of clause 1, further comprising:
   storing, by the first network device, based on identifying an association of the one or more multicast group memberships with the host device, the MAC address, the one or more multicast group memberships associated with the host device, and an attachment circuit of the first network device in an entry of a database associated with internet group management protocol (IGMP) or multicast listener discovery (MLD) snooping with explicit tracking.
3. The method of clause 2, wherein deleting the one or more multicast group memberships associated with the host device includes deleting the entry from the database.
4. The method of any preceding clause, further comprising:
   transmitting, by the first network device, based on receiving the MAC advertisement route message, a group-specific membership query for a multicast group membership of the one or more multicast group memberships associated with the host device.
5. The method of clause 4, further comprising:
   determining that a response to the group-specific membership query has not been received,
   wherein deleting the one or more multicast group memberships associated with the host device includes deleting the multicast group membership based on determining that the response to the group-specific membership query has not been received.
6. The method of any preceding clause, wherein deleting the one or more multicast group memberships associated with the host device includes deleting the one or more multicast group memberships associated with the host device using an internet protocol (IP) address of the host device.
7. The method of any preceding clause, wherein the first network device is a first provider edge device associated with an Ethernet virtual private network (EVPN), and wherein the second network device is a second provider edge device associated with the EVPN.
8. The method of any preceding clause, wherein the host device is a virtual machine.
9. A method, comprising:
   discovering, by a network device of a network, a media access control (MAC) address of a host device, associated with an attachment circuit, that has moved to the network device from another network device of the network; and
   transmitting, by the network device, based on discovering the MAC address of the host device that has moved to the network device from the other network device, over the attachment circuit, a general membership query.
10. The method of clause 9, further comprising:
   receiving, by the network device, based on the general membership query, a membership report associated with the host device; and
   updating a group membership database based on the membership report.
11. The method of clause 9 or clause 10, wherein the host device is a virtual machine.
12. The method of any of clauses 9 to 11, wherein the network is an Ethernet virtual private network (EVPN).
13. A first network device, comprising:
   one or more memories; and
   one or more processors to:
      receive a media access control (MAC) advertisement route message indicating that a second network device has discovered a MAC address of a host device; and
      delete one or more multicast group memberships associated with the host device.
14. The first network device of clause 13, wherein the one or more processors are further to:
   store, based on identifying an association of the one or more multicast group memberships with the host device, the MAC address, the one or more multicast group memberships associated with the host device, and an attachment circuit of the first network device in an entry of a database associated with internet group management protocol (IGMP) or multicast listener discovery (MLD) snooping with explicit tracking.
15. The first network device of clause 14, wherein the one or more processors, to delete the one or more multicast group memberships associated with the host device, are to delete the entry from the database.
16. The first network device of any of clauses 13 to 15, wherein the one or more processors are further to:
   transmit, based on receiving the MAC advertisement route message, a group-specific membership query.
17. The first network device of clause 16, wherein the one or more processors are further to:
   determine that a response to the group-specific membership query has not been received,
   wherein the one or more processors, to delete the one or more multicast group memberships associated with the host device, are to delete the one or more multicast group memberships associated with the host device based on determining that the response to the group-specific membership query has not been received.
18. The first network device of any of clauses 13 to 17, wherein the one or more processors, to delete the one or more multicast group memberships associated with the host device, are to delete the one or more multicast group memberships associated with the host device using an internet protocol (IP) address of the host device.
19. The first network device of any of clauses 13 to 18, wherein the first network device is a first provider edge (PE) device associated with an Ethernet virtual private network (EVPN), and wherein the second network device is a second PE device associated with the EVPN.
20. The first network device of any of clauses 13 to 19, wherein the host device is a virtual machine.

## Claims

1. A method, comprising:
receiving, by a first network device, a media access control (MAC) advertisement route message indicating that a second network device has discovered a MAC address of a host device; and
deleting, by the first network device, one or more multicast group memberships associated with the host device.

2. The method of claim 1, further comprising:
storing, by the first network device, based on identifying an association of the one or more multicast group memberships with the host device, the MAC address, the one or more multicast group memberships associated with the host device, and an attachment circuit of the first network device in an entry of a database associated with internet group management protocol (IGMP) or multicast listener discovery (MLD) snooping with explicit tracking.

3. The method of claim 2, wherein deleting the one or more multicast group memberships associated with the host device includes deleting the entry from the database.

4. The method of any preceding claim, further comprising:
transmitting, by the first network device, based on receiving the MAC advertisement route message, a group-specific membership query for a multicast group membership of the one or more multicast group memberships associated with the host device.

5. The method of claim 4, further comprising:
determining that a response to the group-specific membership query has not been received,
wherein deleting the one or more multicast group memberships associated with the host device includes deleting the multicast group membership based on determining that the response to the group-specific membership query has not been received.

6. The method of any preceding claim, wherein deleting the one or more multicast group memberships associated with the host device includes deleting the one or more multicast group memberships associated with the host device using an internet protocol (IP) address of the host device.

7. The method of any preceding claim, wherein the first network device is a first provider edge device associated with an Ethernet virtual private network (EVPN), and wherein the second network device is a second provider edge device associated with the EVPN.

8. The method of any preceding claim, wherein the host device is a virtual machine.

9. A method, comprising:
discovering, by a network device of a network, a media access control (MAC) address of a host device, associated with an attachment circuit, that has moved to the network device from another network device of the network; and
transmitting, by the network device, based on discovering the MAC address of the host device that has moved to the network device from the other network device, over the attachment circuit, a general membership query.

10. The method of claim 9, further comprising:
receiving, by the network device, based on the general membership query, a membership report associated with the host device; and
updating a group membership database based on the membership report.

11. The method of claim 9 or claim 10, wherein the host device is a virtual machine.

12. The method of any of claims 9 to 11, wherein the network is an Ethernet virtual private network (EVPN).

13. A first network device, comprising:
one or more memories; and
one or more processors to:
receive a media access control (MAC) advertisement route message indicating that a second network device has discovered a MAC address of a host device; and
delete one or more multicast group memberships associated with the host device.

14. The first network device of claim 13, wherein the one or more processors are further to perform the methods of any of claims 2 to 8.
